# EUROPÄISCHE PATENTSCHRIFT

(11) **EP 0 817 404 B1**
(45) Veröffentlichungstag und Bekanntmachung des Hinweises auf die Patenterteilung: **11.05.2005**
(21) Anmeldenummer: 97109352.1
(22) Anmeldetag: 09.06.1997
(51) Int. Cl.: H04B 7/26

(54) **Vorrichtung zur Kompensation der Signallaufzeitunterschiede von digitalen Übertragungseinrichtungen**
Device for delay compensation of difference in transmission time in digital transmission systems
Dispositif de compensation de différences de temps de transfert dans des systèmes de transmission numériques

(30) Priorität: 24.06.1996 DE 19625219
(43) Veröffentlichungstag der Anmeldung: 07.01.1998
(73) Patentinhaber: Infineon Technologies AG, 81669 München (DE)
(72) Erfinder: Alger-Meunier, Michael, 85540 Haar (DE); Ammar, Yousif, 85665 Moosach (DE); Brückmann, Dieter, 40670 Meerbusch (DE); Höfer, Gerald, 86853 Langerringen (DE)
(74) Vertreter: Graf Lambsdorff, Matthias, Dr.

(56) Entgegenhaltungen:
- EP-A- 0 437 835
- US-A- 4 301 539

## Beschreibung

Die Erfindung betrifft eine Vorrichtung zur Übertragung digitaler Signale zwischen einer übergeordneten Stelle und einer oder mehreren untergeordneten Stellen.

Aus dem Dokument EP-A-0 437 835 ist eine Vorrichtung zur Synchronisierung mehrerer Funk-Basisstationen bekannt, bei dem ein TDMA-Rahmensynchronisationssignal von einer zentralen Kontrollstation ausgesendet und von den damit verbundenen Basistationen zurückgesendet wird. Die Laufzeiten der zurückgesendeten Signale werden in der Kontrollstation berechnet und an die Basisstationen übermiftelt. Durch die Einstellung von Verzögerungsgliedern nehmen diese eine entsprechende Kompensation der Laufzeit vor. Es ist weiterhin aus dem Dokument US-A-4 301 539 bekannt, die Signallaufzeiten zwischen einer zentralen Basisstation und einer untergeordneten Basisstation zu kompensieren. Hierzu wird die Phase des Nutzsignals in der Abwärtsverbindung überwacht. Sollte sich diese Phase gegenüber einer Referenz-Phase zu sehr unterscheiden, wird ein Alarmsignal an die zentrale Station gesendet. In der zentralen Station wird dann der Wert eines Verzögerungsglieds entweder manuell oder automatisch geändert.

Die Signallaufzeiten bei unterschiedlichen Übertragungseinrichtungen sind nicht konstant. Zum Beispiel sind bei Drahtverbindungen als Übertragungsmittel die Signallaufzeiten sehr stark von der Länge der Übertragungsleitung abhängig. Bei gleichzeitiger Anwendung von Geräten mit unterschiedlich langen Übertragungsleitungen ist es notwendig, die unterschiedlichen Leitungslaufzeiten jeder Strecke zu kompensieren. Diese Problematik ergibt sich insbesondere bei Anwendungen mit Radio-In-The-Loop (RITL) und bei Systemen mit schnurlosen Telefonendgeräten nach dem DECT-Standard. Die Kompensation von Laufzeitunterschieden wird bislang durch diskrete Lösungen durchgeführt.

Der Erfindung liegt die Aufgabe zugrunde, eine Vorrichtung anzugeben, bei der die Kompensation der Signallaufzeitunterschiede einer zwischen der übergeordneten Stelle und den untergeordneten Stellen angeordnete digitalen Übertragungseinrichtung jederzeit und automatisch aus den einzelnen Signallaufzeiten der jeweiligen Übertragungseinrichtungen ermittelt werden kann.

Die Aufgabe wird durch eine Vorrichtung gemäß Patentanspruch 1 gelöst. Eine Weiterbildung der Erfindung ist Gegenstand eines Unteranspruchs.

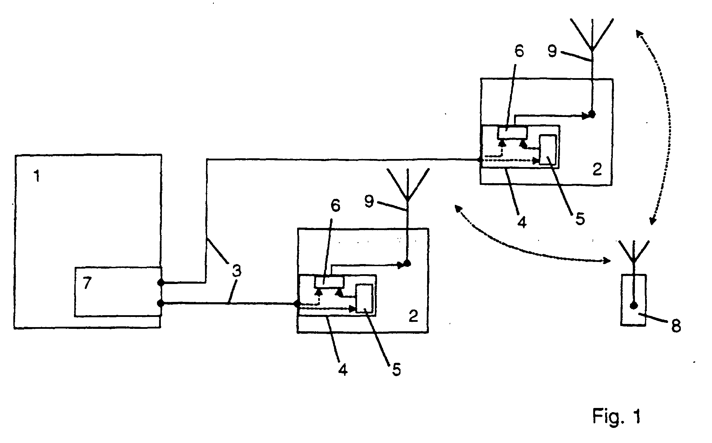

Die Erfindung wird nachfolgend anhand des in der einzigen Figur der Zeichnung dargestellten Ausführungsbeispiels näher erläutert.

Bei der als Ausführungsbeispiel gezeigten erfindungsgemäßen Vorrichtung ist eine Übertragungseinrichtung 3, beispielsweise eine Telefonleitung, zwischen einer übergeordneten Stelle 1, beispielsweise eine Vermittlungsstelle, und einer oder mehreren untergeordneten Stellen 2, beispielsweise eine Teilnehmerendstelle, geschaltet. Die übergeordnete Stelle 1 und die untergeordneten Stellen 2 enthalten Sende- und Empfangseinrichtungen. Ferner umfaßt die übergeordnete Stelle 1 Vorrichtungen zur automatischen Messung der Signallaufzeiten 7 in den Übertragungseinrichtungen 3. In jeder der untergeordneten Stellen 2 sind Vorrichtungen zur automatischen Synchronisierung der Datenübertragung 6 vorgesehen. Ferner ist in jeder der untergeordneten Stelle 2 eine Recheneinrichtung 4 vorgesehen. Diese Recheneinrichtung 4 beinhaltet eine Vorrichtung zur Kompensation der Laufzeitunterschiede 5.

Die ausgangsseitige Sende- bzw. Empfangsstation der übergeordneten Stelle 1 und die eingangsseitigen Sende- bzw. Empfangsstationen der untergeordneten Stellen 2 sind über Übertragungseinrichtungen 3 bidirektional miteinander verbunden. Von den Sende- bzw. Empfangseinrichtungen der untergeordneten Stellen 2 wird das Nutzsignal einer Recheneinrichtung 4, welche eine Vorrichtung zur Synchronisierung der Datenübertragung 6 und eine Kompensationseinrichtung 5 umfaßt, zugeführt. Das kompensierte und synchronisierte Nutzsignal wird anschließend einer weiteren Sende- und Empfangseinrichtung am Ausgang der jeweiligen untergeordneten Stelle zugeführt. Von dieser Sende- bzw. Empfangseinrichtung 9 wird das Nutzsignal ausgangsseitig schnurlos, zum Beispiel über Funk, zu einem Mobilteil 8, zum Beispiel einem DECT-Handy, übermittelt.

Zur Laufzeitmessung wird die in der übergeordneten Stelle 1 vorhandene Information über die Phasenlage des Sendetaktes im Vergleich zum Empfangstakt ausgewertet. Die so ermittelte Signallaufzeit für die jeweilige Übertragungseinrichtung 3 wird zur jeweiligen Empfangsstation der untergeordneten Stelle 2 übertragen, wo sie entsprechend den Anforderungen der Recheneinrichtung codiert wird. Eine Kompensationseinrichtung 5 in jeder der untergeordneten Stellen 2 errechnet automatisch die Laufzeitunterschiede für die jeweiligen Übertragungseinrichtungen 3. Die Laufzeitunterschiede ergeben sich dabei aus der Differenz einer angenommenen maximalen Signallaufzeit und der gemessenen Signallaufzeit in der jeweiligen Übertragungseinrichtung 3. Eine dieser Differenz entsprechende Verzögerung wird in den Speicher einer Synchronisiereinrichtung 6 eingefügt. In den Synchronisiereinrichtungen werden die Signale in den jeweiligen untergeordneten Stellen 2 zueinander synchronisiert. Die empfangenen Nutzsignale in den untergeordneten Stellen 2 werden durch die gespeicherten Verzögerungen verzögert. Auf die Weise wird erreicht, daß die ausgangsseitig zu den Mobilteilen 8 gesendeten Signale bei jeder der untergeordneten Stelle 2 zueinander synchron mit einer Genauigkeit >1 µsec sind.

Der Vorgang erfordert keine manuelle Laufzeitmessung bzw. keine diskrete Einstellung der Kompensationswerte, er kann jederzeit wiederholt werden und wird erst durch die Kombination der beteiligten Einrichtungen auf die beschriebene Weise möglich. Die Laufzeitmessung kann mit der vorliegenden Erfindung in kurzen Abständen (z. B. 50 msec) fortlaufend wiederholt werden. Somit können neben langsamen Änderungen der Signallaufzeiten, wie sie beispielsweise durch Temperaturschwankungen verursacht werden, auch schnelle Änderungen festgestellt werden, deren Erkennung insbesondere bei schnurlosen, mobilen Anwendungen von Bedeutung ist. Entsprechend lassen sich auch die Signale in den untergeordneten Stellen bei einer Veränderung der Signallaufzeit durch eine Veränderung der Kompensationswerte ständig neu synchronisieren.

## Patentansprüche

1. Vorrichtung zur Übertragung digitaler Signale zwischen übergeordneter und untergeordneten Stellen mit einer übergeordneten Stelle (1) mit Sende- und Empfangseinrichtung und einer oder mehreren untergeordneten Stellen (2) mit jeweils einer Sende- und Empfangseinrichtung, mit Nutzsignal-Übertragungseinrichtungen (3) zwischen der übergeordneten Stelle (1) und jeder der untergeordneten Stellen (2), Vorrichtungen in der übergeordneten Stelle (1) zur automatisehen Messung der Signallaufzeiten (7) in den Nutzsignal-Übertragungseinrichtungen (3) anhand der Phasenlage von Sende- und Empfangstakt von in den Nutzsignal-Übertragungseinrichtungen (3) übertragenen Nutzsignalen, Vorrichtungen zur automatischen Synchronisierung der Datenübertragung (6) in jeder der untergeordneten Stellen (2), eine Recheneinrichtung (4) in jeder der untergeordneten Stellen, welche die Synchronisiereinrichtung (6) und eine Kompensationseinrichtung (5) beinhaltet,
die Kompensationseinrichtung (5) die Signallaufzeitunterschiede aus der Differenz einer angenommenen maximalen Signallaufzeit und der jeweiligen tatsächlichen Signallaufzeiten in den jeweiligen Nutzsignal-Übertragungseinrichtungen (3) automatisch errechnet und eine dem Signallaufzeitunterschied entsprechende Verzögerung in den Speicher der Synchronisiereinrichtung (4) automatisch einfügt, Sendeeinrichtungen in den untergeordneten Stellen (2) die ausgangsseitig gesendeten Signale durch die gespeicherte Verzögerung automatisch verzögern.

2. Verwendung der Vorrichtung nach Anspruch 1,
**dadurch gekennzeichnet,**
**daß** die Vorrichtungen zur automatischen Messung der Signallaufzeiten (7), die Vorrichtungen zur automatischen Synchronisierung der Datenübertragung (6) und die Vorrichtungen zur automatischen Kompensation der Signallaufzeitunterschiede(5) gekoppelt werden zur störungsfreien Übertragung von Signalen zwischen den untergeordneten Stellen (2) und Schnurlos mit diesen verbundenen Mobilteilen (8).

## Claims

1. Apparatus for transmission of digital signals between higher-level and lower-level points, having a higher-level point (1) with a transmission and reception device, and one or more lower-level points (2) each having a transmission and reception device, having payload signal transmission devices (3) between the higher-level point (1) and each of the lower-level points (2),
apparatuses in the higher-level point (1) for automatic measurement of the signal delay times (7) in the payload signal transmission devices (3) on the basis of the phase angle of the transmission and reception clock for payload signals which are transmitted in the payload signal transmission devices (3),
apparatuses for automatic synchronization of the data transmission (6) in each of the lower-level points (2), a computation device (4) in each of the lower-level points, which contains the synchronization device (6) and a compensation device (5),
the compensation device (5) automatically calculates the signal delay time differences from the difference between an assumed maximum signal delay time and the respective actual signal delay times in the respective payload signal transmission devices (3), and automatically inserts a delay, which corresponds to the signal delay time difference, in the memory of the synchronization device (4),
transmission devices in the lower-level points (2) automatically delay the signals which are transmitted on the output side, by the stored delay.

2. Use of the apparatus according to Claim 1,
**characterized**
**in that** the apparatuses for automatic measurement of the signal delay times (7), the apparatuses for automatic synchronization of the data transmission (6), and the apparatuses for automatic compensation for the signal delay time differences (5) are coupled for disturbance-free transmission of signals between the lower-level points (2) and mobile parts (8) which are cordlessly connected to them.

## Revendications

1. Dispositif de transmission de signaux numériques entre des stations de niveau supérieur et de niveau inférieur, une station de niveau supérieur (1) comportant un dispositif d'émission et de réception et une ou plusieurs stations de niveau inférieur (2) comportant chacune un dispositif d'émission et de réception, ledit dispositif de transmission comportant
des éléments de transmission de signaux utiles (3) entre la station de niveau supérieur (1) et chacune des stations de niveau inférieur (2),
des dispositifs situés dans la station de niveau supérieur (1) et destinés à mesurer automatiquement les temps de propagation de signal (7) dans les éléments de transmission de signaux utiles (3) au moyen de la position de phase de la cadence d'émission et de réception de signaux utiles transmis dans les éléments de transmission de signaux utiles (3),
des dispositifs de synchronisation automatique de la transmission de données (6) dans chacune des stations de niveau inférieur (2),
un élément de calcul (4) dans chacune des stations de niveau inférieur, qui comporte l'élément de synchronisation (6) et un élément de compensation (5), l'élément de compensation (5) calculant automatiquement les différences de temps de propagation de signal à partir de la différence entre le temps de propagation de signal maximum reçu et les temps de propagation de signal réels respectifs dans les éléments de transmission de signaux utiles respectifs (3) et introduisant automatiquement un retard correspondant à la différence de temps de propagation de signal dans la mémoire de l'élément de synchronisation (4),
des éléments d'émission dans les stations de niveau supérieur (2) retardant automatiquement du retard mémorisé les signaux envoyés en sortie.

2. Utilisation du dispositif selon la revendication 1, **caractérisée en ce que** les dispositifs destinés à mesurer automatiquement les temps de propagation de signal (7), les dispositifs destinés à synchroniser automatiquement la transmission de données (6) et les dispositifs destinés à compenser automatiquement les différences de temps de propagation de signal (5) sont couplés pour transmettre sans perturbation des signaux entre les stations de niveau inférieur (2) et des parties mobiles (8) reliés sans fil à ces stations.
